# EUROPEAN PATENT SPECIFICATION

(11) **EP 2 352 777 B1**
(45) Date of publication and mention of the grant of the patent: **22.03.2017**
(21) Application number: 09789574.2
(22) Date of filing: 06.04.2009
(51) Int. Cl.: C08G 63/00, C08L 67/00

(54) **BLENDS OF POLYLACTIC ACID AND THERMO-PLASTIC POLYMERS FOR PACKAGING APPLICATIONS**
THERMOPLASTISCHES POLYMER/ POLYMILCHSÄURE BLENDS FÜR VERPACKUNGEN
MÉLANGES DE POLY(ACIDE LACTIQUE) ET DE POLYMÈRES THERMOPLASTIQUES POUR DES APPLICATIONS D'EMBALLAGE

(30) Priority: 07.11.2008 US 112543 P
(43) Date of publication of application: 10.08.2011
(73) Proprietor: Colgate-Palmolive Company, New York, NY 10022 (US)
(72) Inventor: SHI, Yu, Branchburg NJ 08876 (US)
(74) Representative: Schicker, Silvia
(86) International application number: PCT/US2009/039644
(87) International publication number: WO 2010/053592

(56) References cited:
- US-A1- 2007 128 459
- US-A1- 2007 129 503
- DATABASE WPI Week 200470 Thomson Scientific, London, GB; AN 2004-712937 XP002533252 & JP 2004 277939 A (TEIJIN LTD) 7 October 2004 (2004-10-07)
- DATABASE WPI Week 200667 Thomson Scientific, London, GB; AN 2006-640186 XP002533253 & JP 2006 232975 A (TOYOBO KK) 7 September 2006 (2006-09-07)
- DATABASE WPI Week 200341 Thomson Scientific, London, GB; AN 2003-433021 XP002533254 & JP 2002 338673 A (TEIJIN LTD) 27 November 2002 (2002-11-27)
- SIGNORI F ET AL: "Thermal degradation of poly(lactic acid) (PLA) and poly(butylene adipate-co-terephthalate) (PBAT) and their blends upon melt processing" POLYMER DEGRADATION AND STABILITY, BARKING, GB, vol. 94, no. 1, 1 January 2009 (2009-01-01), pages 74-82, XP025799264 ISSN: 0141-3910 [retrieved on 2008-11-01]

## Description

### FIELD OF THE INVENTION

The invention encompasses blends of polymers including, for example, polylactic acid and polyethylene terephthalate and articles manufactured therefrom. In certain embodiments, the invention encompasses blends of polymers including, for example, polylactic acid and polyethylene terephthalate that are useful in packaging and have improved physical properties, such as flexibility, elongation and/ or dead-fold. In addition, the polymer blends of the invention may be suitable for a number of applications, such as in the manufacture of disposable bottles, wraps, bags and other packaging materials or as coating materials.

### BACKGROUND OF THE INVENTION

Certain packaging materials are only intended for a single use, such as boxes, cartons, pouches, bags and wraps used to package items purchased from wholesale and retail outlets. There is an ever-increasing amount of packaging materials that are used once and then discarded. In view of the high volume of disposable packaging materials being generated, some countries, particularly those in Europe, have begun to mandate either the recycling.
In the WPI DATABASE, Week 200470, Thomson Scientific, London, GB; AN 2004-712937, XP002533252 & JP 2004 277939A compositions are disclosed containing PLA and with an intrinsic viscosity of up to 0.8 dl/g.

The current inventors have developed improved polymer blends, which are disclosed and claimed herein.

### BRIEF SUMMARY OF THE INVENTION

The invention generally encompasses compositions including a blend of polymers.

In certain embodiments, the composition include a polymer blend of poly-lactic acid and polyethylene terephthalate.

In certain embodiments, the composition has an intrinsic viscosity of about 0,5 dl/g to about 0.9 dl/g.

In certain embodiments, the composition has an intrinsic viscosity of about 0.7 dl/g.

In the embodiments, the poly-lactic acid is present in an amount of about 1 wt. % to about 20 wt. %.

In certain embodiments, the poly-lactic acid is present in an amount of about 3 wt. % to about 10 wt. %.

In certain embodiments, the poly-lactic acid is present in an amount of about 5 wt. %.

In certain embodiments, the polyethylene terephthalate is present in an amount of about 80 wt. % to about 99 wt. %.

In certain embodiments, the polyethylene terephthalate is present in an amount of about 90 wt. % to about 97 wt. %.

In certain embodiments, the polyethylene terephthalate is present in an amount of about 95 wt. %.

In certain embodiments, the compositions have an axial Young's modulus of at least about 210000psi.

In certain embodiments, the compositions have a radial Young's modulus of at least about 410000 psi.

The invention also encompasses packaging materials including about 1 wt. % to about 20 wt. % poly-lactic acid and polyethylene terephthalate.

In certain embodiments, the composition has an intrinsic viscosity of greater than about 0.7dl/g.

In certain embodiments, the polylactic acid is present in an amount of about 3 wt % to about 10 wt. %.

In certain embodiments, the polylactic acid is present in an amount of about 5 wt. %.

Fn certain embodiments, the polyethylene terephthalate is present in an amount of about 80 wt. % to about 99 wt %.

In certain embodiments, the polyethylene terephthalate is present in an amount of about 90 wt. % to about 97 wt. %.

In certain embodiments, the polyethylene terephthalate is present in an amount of about 95 wt. %.

In certain embodiments, the compositions an axial Young's modulus at least about 210000 psi.

In certain embodiments, the compositions have a radial Young's modulus of at least about 410000 psi.

The invention also encompasses methods of making a consumer packaging product comprising:
(i) combining 1 wt. % to 20 wt. % poly-lactic acid and polyethylene terephthalate to form a polymer blend;
(ii) mixing polymer blend;
(iii) heating the polymer blend;
(iv) extruding the polymer blend; and
(v) blow-molding to form a consumer packaging product.

The invention also encompasses consumer products including a polymer blend, wherein the polymer comprises:
(i) 1 wt. % to 20 wt. % poly-lactic acid; and
(ii) a polyethylene terephthalate, and wherein the composition has an intrinsic viscosity of greater than 0.7 dl/g.

In certain embodiments, the polyethylene terephthalate is present in an amount of about 80 wt. % to about 99 wt. %.

In certain embodiments, the polyethylene terephthalate is present in an amount of about 90 wt. % to about 97 wt. %

In certain embodiments, the polyethylene terephthalate is present in an amount of about 95 wt. %

In certain embodiments, the polylactic acid is present in an amount of about 3 wt. % to about 10 wt. %.

In certain embodiments, the polylactic acid is present in an amount of about 5 wt. %.

In the embodiments, the polymer blend has an axial Young's modulus at least 210000 psi.

In the embodiments, the polymer blend has a radial Young's modulus of at least 410000 psi.

### BRIEF DESCRIPTION OF THE FIGURES

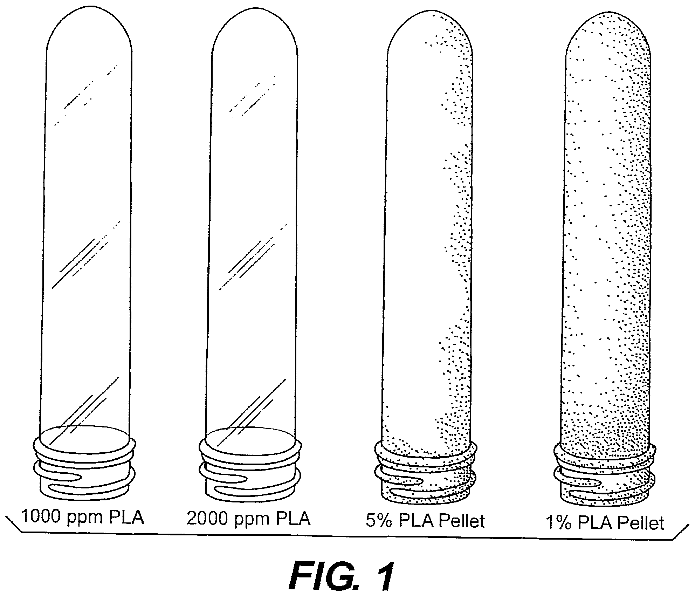

Figure 1 illustrates illustrative embodiments including the polymer blends of the invention including 0.1 % PLA powder in PET, 0.2 % PLA powder in PET, 5% PLA Pellet in PET, and 1% PLA Pellet in PET.

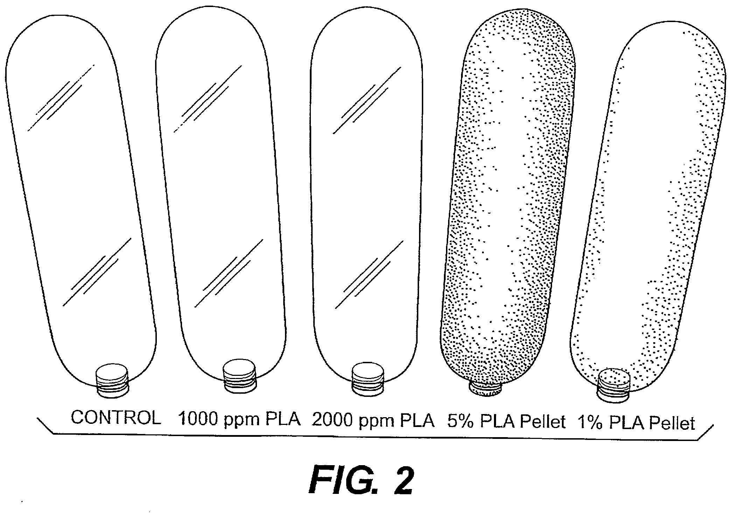

Figure 2 illustrates illustrative embodiments including the polymer blends of the invention including a control, 0.1 % PLA powder in PET, 0.2 % PLA powder in PET, 5% PLA Pellet in PET, and 1% PLA Pellet in PET.

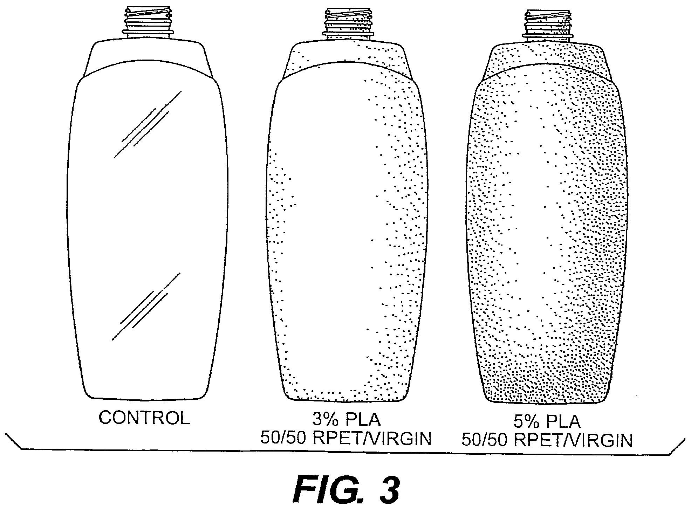

Figure 3 illustrates illustrative embodiments of bottles including the polymer blends of the invention including a control, 3% PLA 50/50 RPET/ virgin, and 5% PLA 50/50 RPET/ virgin.

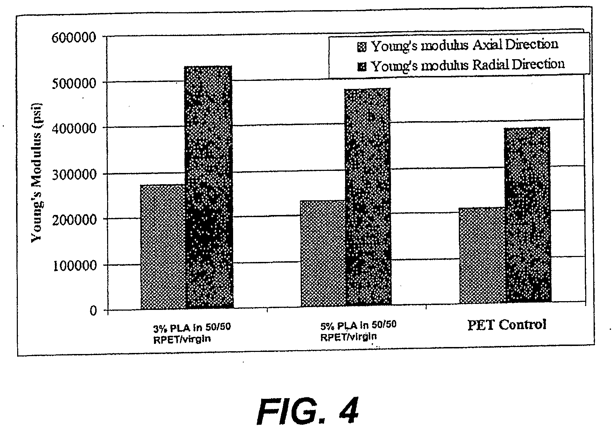

Figure 4 illustrates a bar graph of the axial and radial Young's moduli of illustrative bottles including the polymer blends of the invention

### DETAILED DESCRIPTION OF THE INVENTION

As used throughout, ranges are used as a shorthand for describing each and every value that is within the range. Any value within the range can be selected as the terminus of the range. In the event of a conflict in a definition in the present disclosure and that of a cited reference, the present disclosure controls.

### General Description

The invention encompasses polymer Mends including one or more polymers, in particular, polylactic acid and polyethylene terephthalate. The polymer blends of the invention have improved properties, including increased strength, flexibility, elongation, temperature stability, processability, breathability and dead-fold.

The polymer blends of the invention can be extruded, blown, cast or otherwise formed into sheets and films for use in a wide variety of packaging materials, such as wraps, bags, pouches, and laminate coatings, or they may be molded into shaped articles, for example, bottles. In certain embodiments, existing mixing, extrusion, blowing, injection molding, and blow molding apparatus known in the thermoplastic art are suitable for use in forming useful articles of manufacture, including bottles, sheets and films, from the polymer blend compositions described herein.

In certain embodiments, blends containing a polymer, derived from a natural source, for example, polylactic acid and a thermoplastic polymer, for example, polyethylene terephthalate (PET), polypropylene (PP), polyethylene (PE) or combinations thereof, are surprisingly shown to have strength and elongation properties, which are superior to the polymer(s) taken alone. Thus, the invention encompasses blends that possess or demonstrate surprising synergistic effects.

In certain embodiments, blends containing polylactic acid and polyethylene terephthalate (PET) are used in the compositions of the invention.

In another embodiment, the invention encompasses polymer blends characterized as having a relatively high glass transition temperature and which are highly crystalline at room temperature. The inventors have discovered the surprising and unexpected result that various blends of polylactic acid with polyethylene terephthalate actually exhibit higher elongation than the polymers by themselves, as well as higher break stress compared to the polymers by themselves.

In certain embodiments, blending a mixture of poly lactic acid with polyethylene terephthalate, In marry cases, exhibit the favored characteristics or each polymer by itself, in some cases exhibiting even better properties, while diminishing or minimizing the negative properties of each polymer by itself.

The invention encompasses a polymer blend including poly-lactic acid and having an axial Young's modulus at least about 210000 psi and having a radial Young's modulus of at least about 410000 psi.

Another embodiment encompasses a consumer product including a blend of for example, poly-lactic acid and one or more thermoplastic polymers including polyethylene terephthalate.

### Polymers

Polymers may include polymers, which include a range of synthetic polymers, such as polyesters, polyester amides, polycarbonates and the like. Naturally-derived semi-synthetic polyesters (e.g., from fermentation) can also be used. Natural macromolecules containing hydrolyzable linkages, such as protein, cellulose and starch, are generally susceptible to degradation by the hydrolytic enzymes of microorganisms. The polymer blends may also exhibit characteristics that affect degradabilitv including crystallinity, chain flexibility and chain length.

Polymers may include, but are not limited to, synthetic polyesters, semi-synthetic polyesters made by fermentation (e.g., PHB and PHBV), polyester amities, polycarbonates, and polyester urethanes. In other embodiments, it is possible to optionally include a variety of natural polymers and their derivatives, such as polymers including or derived from starch, cellulose, other polysaccharides and proteins.

Included within the polymer blends may be polymers based on, for example, polylactic acid, polyhydroxybutyrate, polyamide, polytartrate, and mixtures thereof.

The polymers of the invention include polymers based on or including polylactic acid ("PLA"). As used herein, the term polylactic acid is synonomous with polylactide and includes degradable, thermoplastic, aliphatic polyester derived from renewable resources, such as corn starch or sugarcanes.

The PLA of the invention is chiral and therefore can exist in several distinct forms including poly-L-lactide (PLLA) is the product resulting from polymerization of L,L-lactide (also known as L-lactide). In certain embodiments of the invention, PLA has a crystallinity of greater than 25%, for example, about 37%, a glass transition temperature between 50-80°C and a melting temperature between 173-178°C.

In certain embodiments, polylactic acid of the invention can be processed like most thermoplastics into fiber (for example using conventional melt spinning processes) and film. The melting temperature of PLLA can be increased 40-50°C and its heat deflection temperature can be increased from approximately 60°C to up to 190°C by physically blending the polymer with PDLA (poly-D-lactide). PDLA and PLLA blends of the invention form a highly regular stereocomplex with increased crystallinity. In certain embodiments, the temperature stability can be maximized when a 50:50 blend is used, but even at lower concentrations of 3-10% of PDLA, there is still a substantial improvement. In the latter case, PDLA acts as a nucleating agent, thereby increasing the crystallization rate. Degradation of PDLA is slower than for PLA due to the higher crystallinity of PDLA. Accordingly, the invention encompasses lactic acid and its several isomeric forms, for example L-(+)-lactic acid; D-(-)-lactic acid, and mixtures thereof. In another embodiment, the invention encompasses the racemic mixture, DL- lactic acid.

Also included are high polymers of lactic acid (Mn = about 50,000 to about 110,000), which are strong polymers that can be fabricated into useful products that can be broken down by common soil bacteria In certain embodiments, PLA can be a homopolymer or it may be copolymerized with glycolides, lactones or other monomers.

High polymers of lactic acid can be manufactured, for example, in a two-step process, Lactic acid is first oligomerized to a linear chain with a molecular weight of less than 3000 by removing water. The oligomer is then de polymerized to lactide, which is a cyclic dimer consisting of two condensed lactic acid molecules. This six-member ring is purified and subjected to ring opening polymerization to produce polylactic acid with a molecular weight of 50,000-110,000.

The invention also encompasses polymer blends including polylactide aliphatic copolymer ("CPLA"), which is a derivative of PLA and is sold by Dianippon Ink. Two classes of CPLA are sold and are referred to as "CPLA hard" and "CPLA soft." CPLA hard has a glass transition temperature of 60°C, while CPLA soft has a glass transition temperature of 51°C.

The polylactic acid of the invention is present in an amount of about 1 wt. % to about 20 wt. % based on the weight percent of the polymer blend. In other embodiments, the poly<r>lactic acid is present in an amount of about 3 wt. % to about 10 wt. %. In other embodiments, the polylactic acid is present in an amount of about 5 wt. %.

The polymer blends of the invention also encompass one or more thermoplastic polymers, including polyethylene terephthalate.

In certain embodiments, the thermoplastic polymer is polyethylene terephthalate (PET). PET polymers are manufactured by DuPont, and sold under the trade name BIOMAX. The invention also encompasses modified PET polymers sold by DuPont and described in greater detail in U.S. Pat. No. 5,053,482 to Tietz, U.S. Pat. No. 5,097,004 to Gallagher et al, U.S. Pat. No. 5,097,005 to Tietz, U.S. Pat. No. 5,171,308 to Gallagher et al., U.S. Pat No. 5,219,646, to Gallagher et al., and U.S. Pat No. 5,295,985 to Romesser et al..

In certain embodiments, the PET has a molecular weight of 60,000-80,000.

In certain embodiments, the PET polymer is a modified PET. As used herein, the term "modified PET" refers to PET, which contains co-monomers, for example, ether, amide or aliphatic monomers that provide weak linkages that are susceptible to degradation including biodegradation through hydrolysis.

In certain embodiments, the PET polymers can be characterized as including alternating units of terephthalate and an aliphatic constituent, with the aliphatic constituent including a statistical distribution of two or more different aliphatic units derived from two or more different diols, such as ethylene glycol, diethylene glycol, triethylene oxide, polyethylene glycol, lower alkane diols, both branched and unbranched, and derivatives of the foregoing.

In other embodiments, a portion of the aliphatic units can also be derived from an aliphatic diacid, such as adipic acid. In addition, a fraction of the phenylene groups within the repeating terephthalate units can be sulfonated and neutralized with an alkali metal or alkaline earth metal base. Both the aliphatic portion of the modified PET polymer as well as the statistically significant quantity of sulfonated terephthalate units contribute to the degradability of the BIOMAX polymer.

In other embodiments, modified polyethylene terephthalates consist essentially of recurring structural units having the following general formula: --[--C(O)--R--C(O)--OGO--]ₐ--[--C(O)-Q-O--]_{b}-- wherein up to about 40 mole % of R is selected from the group consisting of a chemical bond and one or more divalent, non-aromatic, C₁-C₁₀ hydrocarbylene radicals, and the remainder of R is at least about 85% mole % p-phenylene radical, wherein G includes from 0 to about 30 mole % of a polyethylene ether radical selected from the group consisting of: --(CH₂)₂--O--(CH₂)₂--and --(CH₂)₂-O--(CH₂)₂ --O--(CH₂)₂-- and the remainder of G is selected from the group consisting of polyalkylene ether radicals of molecular weight at least about 250 (number average), and --(CH₂)₂--, --(CH₂)₃--, and --(CH₂)₄-- radicals, wherein Q is derived from a hydroxy acid of the formula: HO[--C(O)-Q-O--]ₓH wherein x is an integer and such hydroxy acids have a melting point at least 5 °C below their decomposition temperature, and Q is selected from the group consisting of a chemical bond and hydrocarbylene radicals-(CH₂)ₙ--, where n is an integer from 1 to 5, --C(R')H--, and --C(R')HCH₂--. wherein R' is selected from the group consisting of -CH₃ and --CH₂CH₃, and wherein "a" and "b" are mole fractions of the polymer, and the mole fraction "a" may be 0.6 to 1 and, correspondingly, mole fraction "b" may be 0 to 0.4, and wherein about 0.1 to about 15 mole %, preferably about 0.1 to about 2.5 mole %, of the polymer contains alkali metal or alkaline earth metal sulfo groups, especially about 1.5 to about 2 mole % of such groups.

The invention also encompasses thermoplastic polymers based on starch that include plasticizers such as glycerine, sorbitol, propylene glycol and the like. In certain embodiments, when manufacturing wraps for use in covering food products thermoplastic starch polymers are made without the use of such plasticizers, which can potentially diffuse into food. Thermoplastic starch polymers for use in making food wraps may advantageously utilize the natural water content of native starch granules to initially break down the granular structure and melt the native starch. Thereafter, the melted starch can be blended with one or more synthetic polymers, and the mixture dried by venting, in order to yield a final polymer blend. Where it is desired to make food wraps or other sheets or films intended to contact food using a thermoplastic starch polymer made with a high boiling liquid plasticizer, it will be to limit the quantity of such thermoplastic starch polymers to less than 10% by weight of the polymer mixture, exclusive of any solid fillers.

In addition to the polymers described above, polymers for use in the compositions and methods of the invention can include, but are not limited to, acrylonitrile butadiene styrene (ABS); acrylic; celluloid; cellulose acetate; ethylene-vinyl acetate (EVA); ethylene vinyl akahol (EVAL); fluoroplastics (PTFE, FEP, PFA, CTFE, ECTFE, ETFE); ionomers; Kydex, a trademarked acrylic/PVC alloy; liquid crystal polymers (LCP); polyacetal (POM or Acetal); polyacrylates (Acrylic); polyacrylonitrile (PAN or Acrylonitrile); polyamide (PA or Nylon); polyamide-imide (PAI); polyaryletherketone (PAEK or Ketone); polybutadiene (PBD); polybutylene (PB); polybutylene terephthalate (PBT); polycaprolactone (PCL); polychlorotrifluoroethylene (PCTFE); polyethylene terephthalate (PET); polycyclohexylene dimethylene terephthalate (PCT); polycarbonate (PC); polyhydroxyalkanoates (PHAs); polyketone (PK); polyesters; polyethylene (PE) including high density polyethylene (HDPE); polyetheretherketone (PEEK); polyetherimide (PEI); polyethersulfone (PES); polyethylenechlorinates (PEC); polyimide (PI); polylactic acid (PLA); polymethylpentene (PMP); polyphenylene oxide (PPO); polyphenylene sulfide (PPS); polyphthalamide (PPA); polypropylene (PP); polystyrene (PS); polysulfone (PSU); polyvinyl chloride (PVC); polyvinylidene chloride (PVDC); and combinations thereof.

In certain embodiments, the thermoplastic polymers of the invention are elastic and flexible above a glass transition temperature Tg, specific for each polymer - the midpoint of a temperature range in contrast to the sharp freezing point of a pure crystalline substance like water. In certain embodiments, below a second, higher melting temperature, Tm, also the midpoint of a range, in certain embodiments, the thermoplastic polymers have crystalline regions alternating with amorphous regions in which the chains approximate random coils. In other embodiments, the amorphous regions contribute elasticity and the crystalline regions contribute strength and rigidity, as is also the case for non-thermoplastic fibrous proteins such as silk. Above Tm in certain embodiments crystalline structure disappears and the chains become randomly inter dispersed. As the temperature increases above Tm, viscosity gradually decreases without any distinct phase change.

In certain embodiments, the thermoplastic polymer of the invention can go through melting/freezing cycles repeatedly. This quality makes thermoplastics recyclable. The processes required for recycling vary with the thermoplastic. The plastics used for soda bottles are a common example of thermoplastics that can be and are widely recycled. The protein α-keratin, softens on heating, is somewhat reshapeable, and may be regarded as a natural, quasi-thermoplastic material.

In certain embodiments, the thermoplastic polymers do not crystallize and are termed "amorphous" plastics and are useful at temperatures below the Tg. They are frequently used in applications where clarity is important. Some typical examples of amorphous thermoplastics are PMMA, PS and PC. Generally, amorphous thermoplastics are less chemically resistant and can be subject to stress cracking. Thermoplastics will crystallize to a certain extent and are called "semi-crystalline" for this reason. Typical semi-crystalline thermoplastics are PE, PP, PBT and PET. The speed and extent to which crystallization can occur depends in part on the flexibility of the polymer chain. Semi-crystalline thermoplastics are more resistant to solvents and other chemicals. If the crystallites are larger than the wavelength of light, the thermoplastic is hazy or opaque. Semi-crystalline thermoplastics become less brittle above Tg. If a plastic with otherwise desirable properties has too high a Tg, it can often be lowered by adding a low-molecular-weight plasticizer to the melt before forming (Plastics extrusion; molding) and cooling. A similar result can sometimes be achieved by adding non-reactive side chains to the monomers before polymerization. Both methods make the polymer chains stand off a bit from one another. Before the introduction of plasticizers, plastic automobile parts often cracked in cold winter weather. Another method of lowering Tg (or raising Tm) is to incorporate the original plastic into a copolymer, as with graft copolymers of polystyrene, or into a composite material. Lowering Tg is not the only way to reduce brittleness. Drawing (and similar processes that stretch or orient the molecules) or increasing the length of the polymer chains also decrease brittleness.

It is possible to include thermoplastic polymers based on starch that include a high boiling liquid plasticizer such as glycerine, propylene glycol and the like. In certain embodiments, when manufacturing wraps are intended to come into contact with food products, to utilize thermoplastic starch polymers that are made without the use of such plasticizers, which can potentially diffuse into food. In certain embodiments, thermoplastic starch polymers for use in making food wraps may advantageously utilize the natural water content of native starch granules to Initially break down the granular structure and melt the native starch. Thereafter, the melted starch can be blended with one or more synthetic polymers, and the mixture dried by venting, in order to yield a final polymer blend. Where it is desired to make food wraps or other sheets or films intended to contact food using a thermoplastic starch polymer made with a high boiling liquid plasticizer, it may be desirable to limit the quantity of such thermoplastic starch polymers to less than 10% by weight of the polymer mixture, exclusive of any solid fillers.

It is possible to include one or more non-biodegradable polymers within the polymer blends (i.e., a thermoplastic polymer that is not a bio-polymer). Such polymers may remain in particulate form, or they may become thermoplastic during processing. In certain embodiments, the resulting polymer blends will tend to exhibit degradability, for example, the nondegradable polymers are included as a disperse, rather than a continuous phase.

In certain embodiments, the thermoplastic polymer is polyethylene terephthalate. In certain embodiments, the thermoplastic polymer is polypropylene. In certain embodiments, the thermoplastic polymer is polyethylene. In certain embodiments, the polyethylene is high density polyethylene. In certain embodiments, the thermoplastic polymer is present in an amount of about 80 wt. % to about 99 wt. %. In certain embodiments, the thermoplastic polymer is present in an amount of about 90 wt. % to about 97 wt. %. In certain embodiments, the thermoplastic polymer is present in an amount of about 95 wt. %.

### Compositions of the Invention

The invention encompasses polymer blends having improved properties compared to unblended polymers or thermoplastic homopolymers and copolymers. The polymer blends exhibit, for example, improved strength, flexibility, elongation, temperature stability, processability, and dead-fold. Moreover, sheets, films and other articles made from such blends are in many ways superior to conventional plastics, which are not readilv printable absent special treatment, and which generally have poor dead-fold properties.

Polymer blends according to the invention include polylactic acid and polyethylene terephthalate. As used herein, the term "polymer blend (s)" and "blend(s)" refers to a mixture of at least one naturally occurring polymer and at least one thermoplastic polymer. one thermoplastic polymer In certain embodiments the term
"polymer blend(s)" and "blend(s)" refers to a blend of polylactic acid and PET, PP, PE, HDPE, or mixtures thereof.

When blended together, it is possible to derive the beneficial properties from each polymer while offsetting or eliminating the negative properties of each polymer when used separately to make films, sheets and other articles.

Potential applications of the polymer blends include disposable bottles, paper coatings for packaging (food and beverage cartons), plastic foam for fast foods, microwavable containers, and other consumer products such as disposable diapers or yard waste bags.

The inventive polymer blends may be extruded, blown or otherwise formed into sheets and films for use in a wide variety of packaging materials, such as wraps, bags, pouches, coverings, and laminate coatings. By blending a polylactic acid with a thermoplastic polymer, the inventors have discovered that, in some cases, the beneficial properties of the blend actually exceed the desirable properties of each polymer when used individually. Thus, the surprising result of an unexpected synergistic effect has been demonstrated.

In another embodiment of the invention, the compositions of the invention are sheets or films including polymer blends and are suitable for making wraps and other packaging materials. The terms "sheets" and "films" are to be understood as having their customary meanings as used in the thermoplastic and packaging arts. Nevertheless, because the distinction between what constitutes a "sheet" and what constitutes a "film" largely turns on the thickness of the article of manufacture, the distinction is somewhat arbitrary (i.e., some articles may constitute both sheets and films). Because the compositions according to the invention can be used to manufacture a wide variety of articles of manufacture, including articles useful to wrap, package or otherwise package food or other solid substrates, including sheets and films having a wide variety of thicknesses (both measured and calculated), it is not the intention of this disclosure to precisely distinguish, in all cases, between what may arguably constitute a "sheet" versus articles, that may arguably constitute a "film". Therefore, when the disclosure refers to "sheets and films" and "sheets or films," the intention is to designate the entire universe of articles of manufacture that may arguably constitute "sheets," "films," or both.

In the case of sheets or films intended to be used as "wraps," such as wraps used to enclose meats, other perishable food items, and especially fast food items (*e.g*., sandwiches, burgers and dessert items), it may be desirable to provide sheets and films having good "dead-fold" properties so that once folded, wrapped or otherwise manipulated into a desired orientation, such wraps will tend to substantially maintain their orientation so as to not spontaneously unfold or unwrap, as occurs with a large number of plastic sheets and films (e.g., polyethylene). As used herein, "dead-fold" is a measure of the ability of a sheet or film to retain a crease, crinkle or other bend. It is measured independently of self cling, heat sealing, or the use of an adhesive to maintain a desired orientation.

Articles of manufacture made according to the invention can have any desired thickness. Thicknesses of sheets and films may range from 0.0001" to 0.1" (about 2.5 microns to about 2.5 mm). Sheets and films suitable for wrapping, enclosing or otherwise covering food items or other solid substrates will typically have a measured thickness between about 0.0003" and about 0.01" (about 7.5-250 microns), and a calculated thickness between about 0.00015" and about 0.005" (about 4-125 microns). The measured thickness will typically be between 10-100% larger than the calculated thickness when the sheets and films are made from compositions that have a relatively high concentration of particulate filler particles, which can protrude from the surface of the sheet or film. This phenomenon is especially pronounced when significant quantities of filler particles having a particle size diameter that is larger than the thickness of the polymer matrix are used.

In view of the foregoing, sheets and films suitable for use as wraps can in certain embodiments have a measured thickness in a range from about 0.0004" to about 0.005" (about 10 to about 125 microns), in other embodiments in a range from about 0.0005" to about 0.003" (about 12 to about 75 microns), and in other embodiments in a range from about 0.001" to about 0.002" (about 25 to about 50 microns). In other embodiments, sheets and films suitable for use as wraps can have a calculated thickness in a range from about 0.0002" to about 0.003" (about 5 to about 75 microns), or a range from about 0.0003" to about 0.002" (about 7.5 to about 50 microns), and a range from about 0.0005" to about 0.0015" (about 12 to about 40 microns).

The difference between the calculated and measured thickness tends to increase with increasing filler content and also with increasing particle size. Conversely, the difference between the calculated and measured thickness tends to decrease with decreasing filler content and also with decreasing particle size. Sheets and films that include no fillers, or lower quantities of fillers having a particle size diameter that is substantially lower than the thickness of the polymer matrix, will have a measured thickness that is similar or equal to the calculated thickness.

In one embodiment, the compositions of the invention are free of any inorganic and organic fillers. In another embodiment, the compositions of the invention optionally include inorganic and organic fillers in order to decrease self-adhesion, lower the cost, and increase the modulus of elasticity (Young's modulus) of the polymer blends. Examples of inorganic fillers include calcium carbonate, titanium dioxide, silica, talc, mica, and the like. Examples of organic fillers include wood flour, seeds, polymeric particles, ungelatinized starch granules, and the like. Inorganic fillers include, for example, aluminum hydroxide, magnesium hydroxide, sodium hydroxide, calcium hydroxide, ferrous hydroxide, and glass powder. In addition, plasticizers may be used in order to impart desired softening and elongation properties. The particulate fillers, both organic and inorganic, may be incorporated to improve the dead-fold properties, increase bulk hand feel, reduce cost, and decrease self-adhesion. Plasticizers may be added to impart desired softening and elongation properties. Sheets and films may be embossed, crimped, quilted or otherwise textured to improve bulk hand feel and dead-fold. The polymer blends according to the invention more readily accept and retain print compared to conventional plastics or waxed papers because they typically include oxygen-containing moieties, such as ester, amide, or urethane groups, to which inks can readily adhere.

The use of fillers coupled with specific processing techniques can be used to create "cavitation." Cavitation occurs as the thermoplastic polymer fraction is pulled in either a monoaxial or biaxial direction and the filler particles create a discontinuity in the film or sheet that increases in size during stretching. During stretching, a portion of the stretched polymer pulls away from the filler particles, resulting in tiny cavities in the vicinity of the filler particles. In certain embodiments, this results in increased breathability and vapor transmission of the sheets and films. It also results in films or sheets having a touch and feel that much more closely resembles the touch and feel of paper, as contrasted with conventional plastic sheets and films. The result is a sheet, film or wrap that can be used for applications that are presently performed or satisfied using paper products (i.e., wraps, tissues, printed materials, etc.)

### Properties of the Polymer Blends

The polymer blends may be engineered to have any desired property. The properties of the final composition will depend on a number of factors, including mix design, processing conditions, post-formation processing, product size, particularly thickness, and the like. In the case of sheets or films intended to be used as "wraps", such as wraps used to enclose meats, other perishable food items, and especially fast food items (*e.g*., sandwiches, burgers and dessert items), it will generally be desirable to provide sheets and films having good "dead-fold" properties so that once folded, wrapped or otherwise manipulated into a desired orientation, such wraps will tend to maintain their orientation so as to not spontaneously unfold or unwrap, as which occurs with a large number of plastic sheets and films (e.g., polyethylene).

The polymer blends of the invention exhibit certain physical properties, such as stiffness, flexibility, water-resistance, strength, elongation, temperature stability, moisture vapor transmission, gas permeability, and/or dead-fold. The application encompasses polymer blends having properties that are appropriate in order for a particular polymer blend, or composition made wherefrom, to exhibit the desired performance criteria. In the case of sheets and films suitable for use as packaging materials, desired performance criteria includes, but is not limited to, elongation, dead-fold, strength, printability, imperviousness to liquids, breathability, temperature stability, and the like.

In order to improve the dead-fold properties of sheets or films produced therefrom, polymers may be selected, which yield blends having a relatively high Young's modulus, for example, greater than about 100 MPa, greater than about 150 MPa, or greater than about 200 MPa. In general, increasing the concentration of the stiff polymer will tend to increase the Young's modulus. The Young's modulus may also be increased by loading the polymer blends with one or more fillers, such as particulate or fibrous fillers, as described above.

In addition to, or instead of, increasing the Young's modulus to improve dead-fold, the sheets or films according to the invention may be optionally processed to increase the "bulk hand feel" of a sheet, which is done by disrupting the generally planar nature of the sheet or film. This can be done, for example, by embossing, crimping, quilting or otherwise texturing the sheet so as to have regularly spaced-apart or random hills and valleys rather than simply a smooth, planar sheet. This may be done, for example, by passing the sheet or film through a pair of knurled or other embossing-type rollers. Such texturing increases the ability of a sheet to take and maintain a fold, crinkle, creases or other bend, thus improving the dead-fold properties of the sheet.

In certain embodiments, the surface area of the polymer blend sheets or films according to the invention increase their bulk hand feel and/or dead-fold is to include particulate fillers in which at least a portion of the particles have a particle size diameter that equals or exceeds the thickness of the polymer film or sheet. In this way, the sheets and films of the invention can be manufactured that have dead-fold approaching or equaling 100%, which exceeds the dead-fold properties of virtually all conventional paper or plastic wraps and sheets currently on the market. A rare example of a conventional sheet or wrap having 100% dead-fold is aluminum or other metal foils.

In order to improve the dead-fold properties of sheets or films produced therefrom, polymer-thermoplastic polymer blends (optionally including fillers) may be engineered so as to yield films having a relatively high Young's modulus, for example, greater than about 100 MPa, or for example greater than about 150 MPa, and in other embodiments, for example, greater than about 200 MPa. It should be understood, however, that Young's modulus only loosely correlates to dead-fold and does not, in every case, serve to define or predict the dead-fold properties of a particular sheet or film.

Another property of the polymer blends according to the invention is that when such blends are blown, extruded, cast, or otherwise formed into sheets and films, such sheets and films are readily printable without further processing. Thus, another advantage of utilizing the inventive polymer blends in the manufacture of wraps is that such blends are generally able to accept and retain print much more easily than conventional plastics or waxed papers. Manly plastics and waxes are highly hydrophobic and must be surface oxidized in order to provide a chemically receptive surface to which ink can adhere.

The term "dead-fold" refers to the tendency of a sheet or film to maintain a crease, crinkle, fold or other bend. The dead-fold properties of sheets and films can be accurately measured using a standard test known in the art. This test provides the ability to compare and contrast the dead-fold properties of various sheets and films. The following equipment is useful in performing the standard dead-fold test: (1) a semicircular protractor, divided along a 1" diameter semicircle; (2) a weight consisting of a smooth-faced metal block that is 0.75+/- 0.05" by 1.25 +/- 0.05" and of such a thickness so as to weigh 50 g +/-0.05 g; (3) a 1" x 4" template for cutting test specimens; (4) a timer or stopwatch capable of timing to 1 second; (5) a utility knife or other cutting tool; and (6) a humidity chamber.

The first step is preparation of an appropriately sized sample. In the case where a film has different properties in the machine direction compared to the cross-machine direction it may be useful to measure and average the dead-fold properties in both directions. The standard sample specimen is a 1" x 4" strip of the sheet or film to be tested.

The second step is a conditioning step in order to ensure uniformity of test conditions. The specimens are conditioned by placing them in a humidity chamber at 23°C and 50% relative humidity for a minimum of 24 hours.

The third step is the actual dead-fold test of each conditioned test strip. The specimen is removed from the humidity chamber and its weight recorded. A light mark is made 1" from one end of the test strip. The test strip is then placed on a flat surface and bent over at the mark but without creasing the strip. Next, the weight is placed squarely and gently over the bend with two thirds (or 0.5") of the weight overlapping the specimen so that a crease is formed, and with one third or (0.25") of the weight overhanging the crease. The edges of the weight parallel to the strip should project evenly (about 0.125") beyond each side of the strip. The weight is allowed to rest on the specimen for 10 seconds. Then it is removed. After exactly 30 seconds, the angle formed by the crease is measured.

The foregoing process is repeated using the other side of the strip and using as many additional strips as will give a statistically accurate measure of the dead-fold properties of a given sheet or film. The average angle A is then input into the following formula to determine the percentage dead-fold C for a given sample: C =100*(180-A)/180.

If the angle A is 0° (i.e., where the crease is maintained so that no spring back is observed), the sample has 100% dead-fold (C=100*(180-0)/180=100%). At the other extreme, if the angle A is 180° (i.e., where the sample springs all the way back so that the sample is essentially flat, the sample has 0% dead-fold (C=100*(180-180)/180=0%). In the middle, a sample that springs back half way so as to form a right angle has 50% dead-fold (C=100*(180-90)/180=50%).

When used to wrap foods, or whenever good dead-fold properties are desired, sheets and films according to the invention can be manufactured so as to have a dead-fold of at least about 50%. In certain embodiments, such sheets and films have a dead-fold greater than about 60%, greater than about 70%, or greater than about 80%. Sheets and films according to the invention have been developed that have a dead-fold approaching or equal to 100%. Sheets and films according to the invention can be manufactured so as to have dead-fold properties that meet or exceed those of standard paper wraps, and which are many times greater than conventional plastic films and sheets, often orders of magnitude greater.

In certain embodiments, the polymer blends of the invention are used in the preparation of consumer products, for example, bottles or other containers having improved tensile strength over known consumer products. The axial Young's modulus may be about 210000 psi, about 230000 psi, about 250000 psi, about 270000 psi, or about 290000 psi. The radial Young's modulus may be about 390000 psi, about 410000 psi, about 430000 psi, about 450000 psi, about 470000 psi, about 490000 psi, about 510000 psi, about 530000 psi, or about 550000 psi.

In certain embodiments, the PET in the polymer blends has an intrinsic viscosity, which is proportional to the volume of the polymer and to the molecular weight, of about 0.1 dl/g to about 1.5 dl/g, in other embodiments the amount is about 0.3 dl/g to about 1 dl/g, in other embodiments about 0.5 dl/g to about 0.9 dl/g, in other embodiments the intrinsic viscosity is about 0.7 dl/g.

### Methods of Manufacturing Polymer Blends, Sheets and Films

It is possible to employ any mixing apparatus known in the art of manufacturing polymer compositions in order to form the polymer blends of the invention. Examples of suitable mixing apparatus that can be used to form the blends according to the invention include a twin-shafted kneader with meshing screws having kneading Hocks sold by the Buss Company, BRABENDER mixer, a THEYSOHN TSK 045 compounder, which is a twin-shaft extruder with shafts rotating in the same direction and which has multiple heating and processing zones, a BUSS KO Kneader having a beatable auger screw, a BAKER-PERKINS MPC/V-30 double and single auger extruder, single or twin auger OMC extruders, a Model EPV 60/36D extruder, a BATTAGGION ME100 direct-current slow mixer, a HAAKE Reomex extruder, a COLLIN Blown Film Extruder, a BATTENFELD-GLOUCESTER Blown Film Extruder, and a BLACK-CLAWSON Cast Film Extruder.

Many of the foregoing mixers are also extruders, which makes them suitable for extruding films or sheets from the inventive blends according to the invention. Alternatively, the blends of the invention can be made using transfer-line-injection technology where resin manufacturers can inject the various minor components of these blends into the main polymer components during manufacture. One of ordinary skill in the art will be able to select and optimize an appropriate manufacturing apparatus according to the desired article to be manufactured. Once a thermoplastic melt has been formed using any of the above-mentioned mixers, or any other appropriate mixing and melting apparatus known in the thermoplastic art, virtually any molding, extrusion or shaping apparatus known in the thermoplastic molding or processing art can be used to produce finished articles of manufacture.

In one embodiment for manufacturing sheets and films, the sheets and films may be manufactured using a compounding twin screw extruder to prepare the polymer blends, and a blown film or cast film line to make the films and sheets. The blown films and sheets of the invention tend to have similar, if not identical, strength and other performance properties in the biaxial direction due to how they are processed (*i.e.,* they are extruded as a tube and then expanded in all directions by blowing air within the confines of the tube, causing it to expand like a balloon). Cast films or sheets, on the other hand, unless subjected to biaxial stretching, will be substantially stronger (*e.g.,* will have substantially greater tensile strength) in the machine direction and will be substantially more tear resistant in the cross-machine direction. When extruding a thermoplastic material, the polymer molecules tend to be oriented in the machine direction. Machine direction orientation is further increased if the extruded sheet or film is passed through a nip to decrease the sheet or film thickness in the machine direction.

The sheets and films according to the invention may comprise a single layer or multiple layers as desired and in certain embodiments the polymer is an internal layer. They may be formed by mono- and co-extrusion, casting and film blowing techniques known in the art. Because they exhibit thermoplastic properties, the polymer sheets can be post-treated by heat sealing to join two ends together to form sacks, pockets, pouches, and the like. The polymer sheets can be laminated onto existing sheets or substrates. The polymer sheets can also be coated themselves.

Monoaxial or biaxial stretching of sheets and films can be used to create cavitation. In certain embodiments, cavitation can increase the breathability and vapor transmission of the polymer blended sheets and films of the invention. It also results in films or sheets having a touch and feel that much more closely resembles the touch and feel of paper compared to conventional thermoplastic sheets and films.

### EXAMPLES

### Example 1

In one illustrative embodiment, PLA was blended into PET at varying loading levels to create a frosted appearance in an oriented container. In this embodiment, liquid colorants currently used to achieve this frosted look are replaced with PLA resin, a less costly material derived from renewable raw materials. The 5% PLA/95% PET blend has a frosted appearance and the analytical results indicate no negative impact on preform SIV or natural stretch ratio.

### Injection Molding

PET and PLA were commercially available for this trial. PLA was added ground and in pellet form to PET pellets to evaluate the impact on PLA on PET perform properties including natural stretch ratio, haze and appearance, and IV loss.

| **Material Description** |
|---|
| 0.1 % PLA powder in PET |
| 0.2% PLA Powder in PET |
| 5% PLA pellets in PET |
| 1% PLA pellets in PET |

The PET resin was dried overnight at 280°F to achieve a moisture level below 50 ppm prior to injection molding. The PLA was blended and added to PET at desired level prior to the injection molding.

The resin samples were injection molded on an Arburg 420C reciprocating screw injection molding machine using the 34.5g 28 mm Colgate preform tooling. The injection molding conditions for each variable are summarized in the following table.

| **Injection Data** | **Example 1** | **Example 2** | **Example 3** | **Example 4** |
|---|---|---|---|---|
| **Description** | **0.1% PLA Powder in PET** | **0.2% PLA Powder in PET** | **1% PLA Pellets in PET** | **5% PLA Pellets in PET** |
| **Relative Humidity** | 32% | 32% | 32% | 32% |
| **Dew Point (°C)** | 1 | 1 | 1 | 1 |
| **Mold Point (°C)** | 4.4 | 4.4 | 4.4 | 4.4 |
| **Ambient Temp (°C)** | 18.0 | 18.0 | 18.0 | 18.0 |
| **Dryer Temp (°F)** | 138 | 138 | 138 | 138 |

| **Barrel Temperatures** | | | | |
|---|---|---|---|---|
| **Feed (°C)** | 260 | 250 | 250 | 261 |
| **Zone 2 (°C)** | 259 | 260 | 260 | 260 |
| **Zone 3 (°C)** | 259 | 262 | 260 | 263 |
| **Zone 4 (°C)** | 260 | 265 | 260 | 274 |
| **Nozzle (°C)** | 260 | 260 | 260 | 260 |
| **Cycle Time (sec)** | 28.4 | 29.6 | 29.6 | 29.6 |

### Freeblow

Preforms were heated in a convection oven to a temperature of approximately 100 °C and then placed onto a mandrel on the free blow molding device. The free blow molding process allows a material to be fully oriented to its natural stretch ratio to understand differences in stretch orientation between material variables. Below is a summary of the areal stretch ratios of each balloon at the middle of the preform sidewall area.

| | **Example 1** | **Example 2** | **Example 3** |
|---|---|---|---|
| Preform Temp. (°C) | 100 | 100 | 100 |
| Blow Pressure (psi) | 55 | 55 | 55 |
| Balloon Volume (ccm) | 1743.1 | 1699 | 1844.5 |

| | | | |
|---|---|---|---|
| The data show that there is no substantial difference in the free blow volume, i.e., the stretching behavior of the perform for PLA content from 0.1% to 5% wt in PET. | | | |

### Example 2

The purpose of this study was to blow mold bottle using 3% and 5% PLA mixed with 50/50 RPET(recycled PET)/Virgin resin

### Injection Molding

The table below summarized the two preform variables.

| **Example** | **Material Description** |
|---|---|
| 1 | 3% PLA in 50/50 RPET/virgin |
| 2 | 5% PLA in 50/50 RPET/virgin |

The PET resin was dried overnight at 280 °F to achieve a moisture level below 50 ppm prior to injection molding. PLA was dried overnight at 212°F, and then the appropriate amount of PLA was added to RPET/Virgin prior to injection molding.

The resin samples were injection molded on an Arburg 420M reciprocating screw injection molding machine with a mixing screw installed to facilitate better melt mixing. The preform used was the 34.5 gram 28 mm preform.

| **Injection Data** | **Example 1** | **Example 2** |
|---|---|---|
| **Description** | **3% PLA in 50/50** | **5% PLA in 50/50** |
| | **RPET/virgin** | **RPET/virgin** |
| **Preform Weight (g)** | 31.7 | 33.9 |
| **Relative Humidity** | 36% | 36% |
| **Dew Point (°C)** | 4 | 4 |
| **Mold Point (°C)** | 12.7 | 12.7 |
| **Ambient Temp (°C)** | 19.4 | 19.4 |
| **Dryer Temp (°C)** | 137.7 | 137.7 |
| **Barrel Temperatures** | | |
| **Feed (°C)** | 269 | 274 |
| **Zone 2 (°C)** | 273 | 275 |
| **Zone 3 (°C)** | 270 | 275 |
| **Zone 4 (°C)** | 270 | 275 |
| **Nozzle (°C)** | 269 | 275 |
| **Cycle Time (sec)** | 31.4 | 31.3 |

### BLOW MOLDING

Preforms were then blow molded using a Sidel SB02/3 blow molding machine The blow molding oven conditions used are included in the following table.

**The bottle section weight**

| **Example** | **1** | **2** |
|---|---|---|
| **Resin** | **3% PLA in 50/50** | **5% PLA in 50/50** |
| | **RPET/virgin** | **RPET/virgin** |
| Top Weight (g) | 11.8 | 11.4 |
| Upper Panel Weight (g) | 8.8 | 8.7 |
| Lower Panel Weight (g) | 7.8 | 8 |
| Base Weight (g) | 5.3 | 5.5 |

### Analytical Testing

The top load strength of 11 bottles from each variable was measured using an Instron device. The bottles were tested empty and vented, using a crosshead speed of 1 inch per minute. The load at 0.25" deflection and maximum load were recorded and are included in the following table.

**Top Load Results**

| **Example** | | **Load at 0.25" (lb_{f})** | **Max. Load (lb_{f})** |
|---|---|---|---|
| 1 | Average | 65.6 | 68 |
| | St. Dev. | 7.4 | 5.7 |
| 2 | Average | 64.7 | 65.4 |
| | St. Dev. | 7.3 | 7.2 |

The minimum top load requirement at 0.25" deflection is 40lb_{f}. Both of the bottle variables are within this specification. The value of 68 and 65.4 lbf is within the range of the PET bottles without PLA content. Therefore, adding PLA into the PET bottles does not negatively impact the PET bottle mechanical properties.

Sidewall tensile bars were cut in the axial and radial directions for each of the two PLA/PET blends and also from a PET container purchased through a retail store. The results indicate improved Young's modulus for both PLA blends when compared to the PET control.

| **Axial Sidewall Tensile Results** | | |
|---|---|---|
| **Example** | **Young's Modulus (psi) Axial** | **Young's Modulus (psi) Radial** |
| **1 (Avg.)** | 273260 | 530316 |
| **Std. Dev.** | 19051 | 39223 |
| **2 (Avg.)** | 232870 | 476067 |
| **Std. Dev.** | 38264 | 40131 |
| **Control (Avg.)** | 209877 | 383656 |
| **Std. Dev.** | 9802 | 51917 |

Preform samples were analyzed by solution IV according to ASTM D4603 with a 60/40 phenol/tetrachloroethane solution and a PET concentration of 0.50%. The results are shown in the table below.

| | **PET** | **Example 1** | **Example 2** |
|---|---|---|---|
| **Intrinsic viscosity (dL/g)** | 0.704 | 0.775 | 0.789 |

The intrinsic viscosity is a measure of PET molecular weight. The higher the IV means a degradation in the PET. The results show that adding PLA into PET does not degrade PET.

## Claims

1. A composition comprising a blend of 1 wt. % to 20 wt. % poly-lactic acid and polyethylene terephthalate, wherein the composition has an intrinsic viscosity of greater than 0.7 dl/g, wherein, when measured according to the method described in the description, the composition has at least one of an axial Young's modulus of at least 210000psi and a radial Young's modulus of at least 410000psi, and wherein the poly-lactic acid has a number average molecular weight (Mn) of 50,000-110,000.

2. A packaging material comprising a blend of 1 wt. % to 20 wt. % poly-lactic acid and polyethylene terephthalate, wherein the composition has an intrinsic viscosity of greater than 0.5 dl/g to 0.9 dl/g, wherein, when measured according to the method described in the description, the composition has at least one of an axial Young's modulus of at least 210000psi and a radial Young's modulus of at least 410000psi, and wherein the poly-lactic acid has a number average molecular weight (Mn) of 50,000-110,000.

3. The composition of claim 1 or claim 2, wherein the composition has an intrinsic viscosity of greater than 0.7 dl/g.

4. The composition of claim 1 or claim 2, wherein the poly-lactic acid is present in an amount of 3 wt. % to 10 wt. %.

5. The composition of claim 1 or claim 2, wherein the poly-lactic acid is present in an amount of about 5 wt. %.

6. The composition of claim 1 or claim 2, wherein the polyethylene terephthalate is present in an amount of 80 wt. % to 99 wt. %.

7. The composition of claim 1 or claim 2, wherein the polyethylene terephthalate is present in an amount of 90 wt. % to 97 wt. %.

8. The composition of claim 1 or claim 2, wherein the polyethylene terephthalate is present in an amount of about 95 wt. %.

9. A method of making a consumer packaging product comprising:
(i) combining 1 wt. % to 20 wt. % poly-lactic acid having a number average molecular weight (Mn) of 50,000-110,000, and polyethylene terephthalate to form a polymer blend;
(ii) mixing the polymer blend;
(iii) heating the polymer blend;
(iv) extruding the polymer blend; and
(v) blow-molding to form a consumer packaging product, wherein the product has an intrinsic viscosity of greater than 0.7dl/g, and wherein, when measured according to the method described in the description, the product has at least one of an axial Young's modulus of at least 210000 psi and a radial Young's modulus of at least 410000 psi.

10. A consumer product comprising a polymer blend, wherein the polymer blend comprises:
(i) 1 wt. % to 20 wt. % poly-lactic acid having a number average molecular weight (Mn) of 50,000-110,000; and
(ii) a polyethylene terephthalate, and wherein the product has an intrinsic viscosity of greater than 0.7 dl/g, and wherein, when measured according to the method described in the description, the product has at least one of an axial Young's modulus of at least 210000 psi and a radial Young's modulus of at least 410000 psi.

11. The consumer product of claim 10, wherein the polyethylene terephthalate is present in an amount of 80 wt. % to 99 wt. %.

12. The consumer product of claim 10, wherein the polyethylene terephthalate is present in an amount of 90 wt. % to 97 wt. %.

13. The consumer product of claim 10, wherein the polyethylene terephthalate is present in an amount of about 95 wt. %.

14. The consumer product of claim 10, wherein the poly-lactic acid is present in an amount of 3 wt. % to 10 wt. %.

15. The consumer product of claim 10, wherein the poly-lactic acid is present in an amount of about 5 wt. %.

## Patentansprüche

1. Legierung mit einer Mischung von 1 Gew.-% bis 20 Gew.-% Polylactid und Polyethylenterephthalat, wobei die Legierung eine Grenzviskosität von größer als 0,7 dl/g hat, wobei dann, wenn gemäß des in der Beschreibung beschriebenen Verfahrens gemessen wird, die Legierung mindestens eines von einem axialen Youngschen Modul von mindestens 210.000 psi und einem radialen Youngschen Modul von mindestens 410.000 psi aufweist, und wobei das Polylactid ein mittleres Molekulargewicht (Mn) von 50.000 - 110.000 aufweist.

2. Verpackungsmaterial mit einer Mischung von 1 Gew.-% bis 20 Gew.-% Polylactid und Polyethylenterephthalat, wobei die Legierung eine Grenzviskosität von größer als 0,5 dl/g bis 0,9 dl/g aufweist, wobei dann, wenn gemäß des in der Beschreibung beschriebenen Verfahrens gemessen wird, die Legierung mindestens eines von einem axialen Youngschen Modul von mindestens 210.000 psi und einem radialen Youngschen Modul von mindestens 410.000 psi aufweist, und wobei das Polylactid ein mittleres Molekulargewicht (Mn) von 50.000 - 110.000 aufweist.

3. Legierung nach Anspruch 1 oder Anspruch 2, wobei die Legierung eine Grenzviskosität von größer als 0,7 dl/g aufweist.

4. Legierung nach Anspruch 1 oder Anspruch 2, wobei das Polylactid in einer Menge von 3 Gew.-% bis 10 Gew.-% vorhanden ist.

5. Legierung nach Anspruch 1 oder Anspruch 2, wobei das Polylactid in einer Menge von etwa 5 Gew.-% vorhanden ist.

6. Legierung nach Anspruch 1 oder Anspruch 2, wobei das Polyethylenterephthalat in einer Menge von 80 Gew.-% bis 99 Gew.-% vorhanden ist.

7. Legierung nach Anspruch 1 oder Anspruch 2, wobei das Polyethylenterephthalat in einer Menge von 90 Gew.-% bis 97 Gew.-% vorhanden ist.

8. Legierung nach Anspruch 1 oder Anspruch 2, wobei das Polyethylenterephthalat in einer Menge von etwa 95 Gew.-% vorhanden ist.

9. Verfahren zum Herstellen eines Verbrauchsverpackungsprodukts aufweisend:
(i) Kombinieren von 1 Gew.-% bis 20 Gew.-% Polylactid mit einem mittleren Molekulargewicht (Mn) von 50.000 - 110.000 und Polyethylenterephthalat, um eine Polymermischung zu bilden;
(ii) Vermischen der Polymermischung;
(iii) Erwärmen der Polymermischung;
(iv) Extrudieren der Polymermischung; und
(v) Blasformen, um ein Verbrauchsverpackungsprodukt zu bilden, wobei das Produkt eine Grenzviskosität von größer als 0,7 dl/g aufweist, und wobei dann, wenn gemäß des in der Beschreibung beschriebenen Verfahrens gemessen wird, das Produkt mindestens eines von einem axialen Youngschen Modul von mindestens 210.000 psi und einem radialen Youngschen Modul von mindestens 410.000 psi aufweist.

10. Verbrauchsgut mit einer Polymermischung, wobei die Polymermischung aufweist:
(i) 1 Gew.-% bis 20 Gew.-% Polylactid mit einem mittleren Molekulargewicht (Mn) von 50.000 - 110.000; und
(ii) einem Polyethylenterephthalat, und wobei das Gut eine Grenzviskosität von größer als 0,7 dl/g aufweist, und wobei dann, wenn anhand des in der Beschreibung beschriebenen Verfahrens gemessen wird, das Gut mindestens eines von einem axialen Youngschen Modul von mindestens 210.000 psi und einem radialen Youngschen Modul von mindestens 410.000 psi aufweist.

11. Verbrauchsgut nach Anspruch 10, wobei das Polyethylenterephthalat in einer Menge von 80 Gew.-% bis 99 Gew.-% vorhanden ist.

12. Verbrauchsgut nach Anspruch 10, wobei das Polyethylenterephthalat in einer Menge von 90 Gew.-% bis 97 Gew.-% vorhanden ist.

13. Verbrauchsgut nach Anspruch 10, wobei das Polyethylenterephthalat in einer Menge von etwa 95 Gew.-% vorhanden ist.

14. Verbrauchsgut nach Anspruch 10, wobei das Polylactid in einer Menge von 3 Gew.-% bis 10 Gew.-% vorhanden ist.

15. Verbrauchsgut nach Anspruch 10, wobei das Polylactid in einer Menge von etwa 5 Gew.-% vorhanden ist.

## Revendications

1. Composition comprenant un mélange de 1 % en poids à 20 % en poids d'acide poly-lactique et de polyéthylène téréphtalate, dans laquelle la composition a une viscosité intrinsèque supérieure à 0,7 dl/g, dans laquelle, lorsqu'elle est mesurée selon le procédé décrit dans la description, la composition présente au moins l'un d'un module de Young axial d'au moins 210 000 psi et d'un module de Young radial d'au moins 410 000 psi, et dans laquelle l'acide poly-lactique a un poids moléculaire moyen en nombre (Mn) de 50 000 à 110 000.

2. Matériau d'emballage comprenant un mélange de 1 % en poids à 20 % en poids d'acide poly-lactique et de polyéthylène téréphtalate, dans lequel la composition a une viscosité intrinsèque supérieure à 0,5 dl/g à 0,9 dl/g, dans laquelle, lorsqu'elle est mesurée selon le procédé décrit dans la description, la composition présente au moins l'un d'un module de Young axial d'au moins 210 000 psi et d'un module de Young radial d'au moins 410 000 psi, et dans laquelle l'acide poly-lactique a un poids moléculaire moyen en nombre (Mn) de 50 000 à 110 000.

3. Composition selon la revendication 1 ou la revendication 2, dans laquelle la composition a une viscosité intrinsèque supérieure à 0,7 dl/g.

4. Composition selon la revendication 1 ou la revendication 2, dans laquelle l'acide poly-lactique est présent en une quantité de 3 % en poids à 10 % en poids.

5. Composition selon la revendication 1 ou la revendication 2, dans laquelle l'acide poly-lactique est présent en une quantité d'environ 5 % en poids.

6. Composition selon la revendication 1 ou la revendication 2, dans laquelle le polyéthylène téréphtalate est présent en une quantité de 80 % en poids à 99 % en poids.

7. Composition selon la revendication 1 ou la revendication 2, dans laquelle le polyéthylène téréphtalate est présent en une quantité de 90 % en poids à 97 % en poids.

8. Composition selon la revendication 1 ou la revendication 2, dans laquelle le polyéthylène téréphtalate est présent en une quantité d'environ 95 % en poids.

9. Procédé de fabrication d'un produit d'emballage de consommation comprenant :
(i) la combinaison de 1 % en poids à 20 % en poids d'acide poly-lactique ayant un poids moléculaire moyen en nombre (Mn) de 50 000 à 110 000, et de polyéthylène téréphtalate pour former un mélange de polymères ;
(ii) le mélange du mélange de polymères ;
(iii) le chauffage du mélange de polymères ;
(iv) l'extrusion du mélange de polymères ; et
(v) le moulage par soufflage pour former un produit d'emballage de consommation, dans lequel le produit a une viscosité intrinsèque supérieure à 0,7 dl/g, et dans lequel, lorsqu'il est mesuré selon le procédé décrit dans la description, le produit présente au moins l'un d'un module de Young axial d'au moins 210 000 psi et d'un module de Young radial d'au moins 410 000 psi.

10. Produit de consommation comprenant un mélange de polymères, dans lequel le mélange de polymères comprend :
(i) 1 % en poids à 20 % en poids d'acide poly-lactique ayant un poids moléculaire moyen en nombre (Mn) de 50 000 à 110 000 ; et
(ii) un polyéthylène téréphtalate, et dans lequel le produit a une viscosité intrinsèque supérieure à 0,7 dl/g, et dans lequel, lorsqu'il est mesuré selon le procédé décrit dans la description, le produit présente au moins l'un d'un module de Young axial d'au moins 210 000 psi et d'un module de Young radial d'au moins 410 000 psi.

11. Produit de consommation selon la revendication 10, dans lequel le polyéthylène téréphtalate est présent en une quantité de 80 % en poids à 99 % en poids.

12. Produit de consommation selon la revendication 10, dans lequel le polyéthylène téréphtalate est présent en une quantité de 90 % en poids à 97 % en poids.

13. Produit de consommation selon la revendication 10, dans lequel le polyéthylène téréphtalate est présent en une quantité d'environ 95 % en poids.

14. Produit de consommation selon la revendication 10, dans lequel l'acide poly-lactique est présent en une quantité de 3 % en poids à 10 % en poids.

15. Produit de consommation selon la revendication 10, dans lequel l'acide poly-lactique est présent en une quantité d'environ 5 % en poids.
